# EUROPÄISCHE PATENTSCHRIFT

(11) **EP 1 002 440 B1**
(45) Veröffentlichungstag und Bekanntmachung des Hinweises auf die Patenterteilung: **27.03.2002**
(21) Anmeldenummer: 98944987.1
(22) Anmeldetag: 13.07.1998
(51) Int. Cl.: H04Q 7/38

(54) **VERFAHREN UND VORRICHTUNG ZUR KUNDENSEITIGEN PERSONALISIERUNG VON GSM-CHIPS**
METHOD AND DEVICE FOR CUSTOMER PERSONALIZATION OF GSM CHIPS
PROCEDE ET DISPOSITIF POUR PERSONNALISER COTE CLIENT DES PUCES GSM

(30) Priorität: 04.08.1997 DE 19733662
(43) Veröffentlichungstag der Anmeldung: 24.05.2000
(73) Patentinhaber: DeTeMobil Deutsche Telekom MobilNet GmbH, 53227 Bonn (DE)
(72) Erfinder: DUPRE, Michael, D-53757 Sankt Augustin (DE)
(74) Vertreter: Riebling, Peter, Dr.-Ing.
(86) Internationale Anmeldenummer: DE9801943
(87) Internationale Veröffentlichungsnummer: WO9908466

(56) Entgegenhaltungen:
- EP-A- 0 481 714
- EP-A- 0 562 890
- EP-A- 0 820 206
- WO-A-93/07697
- WO-A-97/14258

## Beschreibung

Vorgeschlagen wird ein Verfahren zur kundenseitigen Personalisierung von GSM-Chips, bei dem davon ausgegangen wird, daß sich der Chip zum Zeitpunkt der Personalisierung im Endgerät des Kunden befindet.
Nach dem Stand der Technik ist der GSM-Chip bei den Netzbetreibern zur Zeit in einer GSM-Karte implementiert, die in das Endgerät eingesteckt wird. Dieser Chip könnte genausogut fest in das Endgerät integriert sein., z. B. auf einer Einschubkarte eines Computers. Bei dem vorliegenden Verfahren spielt es also keine Rolle, ob eine GSM-Karte oder ein Endgerät mit integriertem Chip verwendet wird. Unter dem Begriff "Chip" wird im weitesten Sinne ein EPROM, ein EEPROM oder auch ein "intelligenter" Mikroprozessor verstanden.

Ohne Beschränkung auf eine bestimmte Ausführungsform ist im folgenden von einem "Chip" und dem "Chiphersteller" die Rede.

Bei der bisherigen, zentralen Personalisierung erhält der Chip neben anderen Daten eine Kartennummer (ICCID), eine Teilnehmerkennung (IMSI) und mehrere Geheimzahlen eingeschrieben. Während der Chiphersteller ohne weiteres die Daten ICCID und IMSI in den Chip einbringen könnte, möchte der Netzbetreiber gerne selbst die Kontrolle über die Geheimzahlen, insbesondere über den Schlüssel Ki, der nur der Karte und dem Netz bekannt sein soll, behalten.

Bei der gegenwärtigen, zentralen Personalisierung bekommt der Netzbetreiber Rohkarten vom Kartenhersteller und schreibt dann den endgültigen, geheimen Schlüssel hinein. Dieser Schlüssel ist dann nur zwei Stellen bekannt, nämlich dem Chip selbst und dem Netzbetreiber.
Nachteilig hierbei ist, daß im Rechenzentrum des Netzbetreibers eine außerordentlich hohe statische Last erzeugt wird. Mit einem Generator werden eine Vielzahl von Schlüsseln erzeugt, die dann in die jeweiligen Karten eingebracht werden. Man schickt dann gleichzeitig den jeweils pro Karte erzeugten Schlüssel zum Rechenzentrum (Authentifikationszentrum AC), und danach wird den Karte an die Verkaufsorganisationen herausgegeben. Das AC hat also im Moment der Herausgabe der jeweiligen Karte bereits alle Teilnehmerkennungen IMSI und die dazugehörenden geheimen Schlüssel Ki gespeichert und muß diese verwalten, obwohl die jeweilige Karte noch irgendwo beim Händler liegt und noch gar nicht verkauft worden ist. Bei einer größeren Anzahl von Verkaufsstellen liegen also Karten, die noch nicht verkauft wurden und deren Daten aber trotzdem vom AC verwaltet werden müssen.

Außerdem besteht prinzipiell die Gefahr, daß wenn ein Hersteller oder irgendein anderes Mitglied der Verkaufsorganisation die Karten personalisieren soll, es sein könnte, daß dieser Schlüssel kompromittiert ist. Die anfängliche Personalisierung des Chip ist also unsicher und mit der Gefahr des Mißbrauchs behaftet.

Die EP-A-562 890 offenbart ein mobiles Kommunikationsnetz mit der Möglichkeit eines Fern-Update eines sogenannten Teilnehmer-Indentitätsmodules (SIM) in Mobilstationen. Die SIM speichert Daten für die Steuerung der Mobilstationen und den Zugriff auf die Dienste des Mobilfunknetzes. Die auf der SIM gespeicherten Daten können nun auf der Funkschnittstelle geändert, d.h. upgedated werden. Ein Verfahren zur Personalisierung einer SIM über die Luftschnittstelle ist hier jedoch nicht beschrieben.

Aus der WO-A-97/14258 ist ebenfalls ein Verfahren und eine Vorrichtung für die Programmierung einer Mobilstation über die Luftschnittstelle bekannt. Hierbei werden bei Bedarf eingespeicherte Programme in der Mobilstation erneuert bzw. zusätzliche Daten über die Luftschnittstelle übertragen. Mit den hier beschriebenen Verfahren ist außerdem eine erstmalige Aktivierung der Mobilstation über die Luftschnittstelle möglich, nicht jedoch die Personalisierung eines Teilnehmeridentitätsmoduls.

Die WO-A-93/07697 betrifft ein Verfahren für die Personalisierung einer aktiven sogenannten SIM-Karte. Hierbei findet die komplette Personalisierung der SIM-Karte in einem authorisierten Terminal statt, welches über eine verschlüsselte Kommunikationsleitung mit dem zentralen Computer des Mobilfunknetzwerkes verbunden ist. Eine Personalisierung der Chipkarte beim erstmaligen Einbuchen des Teilnehmers in das Mobilfunknetz ist auch aus dieser Schrift nicht zu entnehmen.

Der Erfindung liegt deshalb die Aufgabe zugrunde, ein Verfahren, eine Vorrichtung und einen Chip der eingangs genannten Art so weiterzubilden, daß ein unnötig großer Verwaltungsaufwand im AC entfallen kann und daß die Aufbewahrung der geheimen Daten des Chip sicherer ausgebildet ist.

Zur Lösung der gestellten Aufgabe ist die Erfindung durch die technische Lehre des Anspruchs 1 gekennzeichnet. Ein Chip nach der Erfindung ist durch die technische Lehre des Anspruchs 6 gekennzeichnet.

Mit der erfindungsgemäßen technischen Lehre werden insbesondere folgende Vorteile erreicht :
- Vermeidung einer zentralen Personalisierung beim Netzbetreiber
- Ausgabe von sehr vielen GSM-Chips ohne Erzeugung einer statischen Last beim Netzbetreiber
- Wiederverwendung von "gebrauchten" GSM-Chips
- Regelmäßiger Wechsel des secret Key Ki während der Nutzungsdauer durch den Kunden.

Mit dem hier vorgestellten Verfahren bringt der Gerätehersteller/Chiphersteller initiale kartenbezogene Daten in den Chip ein, sozusagen eine Vorpersonalisierung. Die eigentliche Personalisierung nimmt der Netzbetreiber selbst zu einem späteren Zeitpunkt vor, und auch nur bei den Kunden, die ein Vertragsverhältnis mit dem Netzbetreiber eingehen.

Die Vorpersonalisierung erzeugt bei dem Netzbetreiber noch keine statische Last. Das Verfahren bietet somit die Voraussetzung, um "Millionen" von GSM-Chips zu verteilen, z. B. in jedes Auto, in jeden Laptop oder in jede Alarmanlage, und später nur die Chips der Kunden zu "aktivieren", die ein Vertragsverhältnisse eingehen.

Des weiteren ist es möglich, Karten wiederzuverwenden, falls ein Kunde sein Vertragsverhältnis kündigt (z. B. bei Verkauf seines Autos).

Speziell beim Netzbetreiber D1 könnte der Händler zurückgegebene Karten erneut für einen anderen Kunden freischalten. Der Netzbetreiber spart somit die Personalisierung von Karten für das Austauschgeschäft ein.

Zur Verwirklichung der technischen Lehre wird es bevorzugt, wenn der GSM-Chip Toolkit fähig ist. Insbesondere sollte das Endgerät Short Messages zum Netzbetreiber schicken können. Außerdem sollte der Chip eine Funktion anbieten, den Chip wieder initial zu machen (s. u.)
Im übrigen kann auch das Endgerät oder ein anderes Gerät diese Funktion des Chip nutzen
Die Kartennummer und die Versionsnummer (s. u.) sollten durch das Endgerät auslesbar sein (oder auf der GSM-Karte sichtbar sein).

Der Chiphersteller ist für die Vorpersonalisierungzuständig. ICCID und IMSI werden einem Nummernpool entnommen, der Chip selbst leitet sich aus einem Schlüssel K1, den der Chiphersteller kennt, einen initialen Ki_1 ab. PIN und PUK werden auf einen Defaultwert gesetzt.
- Im AC erfolgt kein Eintrag
- Wird ein Kunde gewonnen, erfolgt ein Eintrag im AC. Dieses leitet sich ebenfalls den initialen Key Ki_1 ab.
- Im HLR wird das Hotlining Flag gesetzt
- Der erste Call wird zu einem Security Center geroutet
- Dieses handelt mit dem Verfahren nach Diffie-Hellman einen neuen Ki_2 sowie einen PUK aus.
- Gebrauchte Chips, die wiederverwendet werden sollen, werden mit einer internen Funktion zurückgesetzt.

Die Vorpersonalisierung beim Chiphersteller erfolgt dergestalt, daß jeder Chiphersteller einen Bereich von Kartennummern und Teilnehmerkennungen zugeteilt bekommt. Die Nummernbereiche für ICCID und IMSI sind so groß, daß dies möglich ist.
Weiterhin erhält der Chiphersteller folgende Daten vom Netzbetreiber: a, p, VER, K1

Der Chiphersteller bringt dann folgende Daten in jeden Chip ein:
- ICCID Kartennummer
- IMSI Teilnehmerkennung
   (ist an ICCID gebunden, z. B. gleiche
   Position innerhalb der beiden Nummernbereiche für ICCID und IMSI)
- a hinreichend große Zahl, Basis für Diffie Hellman.
- p hinreichend große Zahl, Primzahl für Diffie Hellman
- VER Versionsnummer, z. B. 8 Byte, eindeutig je Chiphersteller (kann öfters gewechselt werden)
- K1 8 Byte DES-Schlüssel, eindeutig an VER gebunden

- Bemerkung:: Der Netzbetreiber könnte sich mit einem Masterkey den Schlüssel K1 aus der Versionsnummer VER ableiten (z. B. mit DES-Verfahren). Dies ist aber nicht notwendig.

### Der Chip generiert sich dann folgende Geheimzahlen:

- Ki_1 Ki_1 ist ein initialer Ki, den der Chip mit dem DES-Schlüssel K1 aus der IMSI ableitet.
- PIN Die PIN wird fest auf 0000 gesetzt
- PUK Der PUK wird fest auf 00000000 gesetzt
- ggf. weitere Geheimzahlen

Der Chip muß K1 und die generierten Geheimzahlen in einem sicheren Bereich halten und vor Auslesen schützen.

### Die Vorgänge im Authentifikationszentrum AC:

- Das AC kennt von jeder Versionsnummer VER den Schlüssel K1 (kann K1 mit einem Masterkey aus VER abgeleitet werden, brauchen die an die Chiphersteller ausgegebenen K1 nicht gespeichert zu werden)
- Die von den Chips generierten initialen Ki_1 werden nicht in das AC eingetragen

Das AC kennt auch die IMSIs noch nicht, somit ist keine statische Last vorhanden

### Kundengewinnung und Freischaltung durch den Netzbetreiber

Möchte ein Kunde sein Gerät (seine Karte, seinen Chip) nutzen, geht er mit dem Netzbetreiber einen Vertrag ein. Die Kartennummer (ICCID) identifiziert den Chip.

Der Netzbetreiber veranlaßt folgende Aktionen:
- Auslesen oder Ablesen von Kartennummer und Versionsnummer (ICCID, VER)
- Der ICCID ist die IMSI fest zugeordnet
- im AC werden IMSI und VER eingetragen (jetzt erst wird das Teilnehmerverhältnis im AC bekannt gemacht)
- Das AC kennt den Schlüssel K1, der fest an VER gebunden ist und generiert sich aus K1 den initialen Schlüssel
   Ki_1 nach dem gleichen Verfahren, das im Chip verwendet wurde, aus der IMSI
- Das HLR setzt das "Hotlining Flag" zu dieser IMSI. Der erste Call geht dann zu einem SC
   (Security Center)
   (das SC könnte auch das HLR/AC selbst sein)

### Der erste Call: Endpersonalisierung des Chip

- Da der Chip und das AC jetzt den gleichen secret Key Ki_1 kennen, bucht der Chip im Netz ein (Die PIN ist 0000 und dem Kunden bekannt)
- Der erste Call wird wegen Hotlining automatisch zum SC geroutet. Je nach Software im toolkit-fähigen Endgerät könnte der erste call bereits eine Short Message sein
- *Das SC nutzt die Toolkitfähigkeit des Chip aus und handelt mit dem Chip einen neuen secret key Ki_2 aus.*
   Hierbei wird das Verfahren nach Diffie Hellmann verwendet,
   das folgende Vorteile bietet:
   * beliebig lange Keys sind aushandelbar
   * Abhören auf der Luftschnittstelle reicht nicht aus, den generierten Schlüssel auszuspähen

Der Chip speichert den neuen Key Ki_2 ab (dieser wird im folgenden zur Authentikation verwendet).
- Der neue Key kann sofort verifiziert werden (z. B. challenge respone wie bei GSM üblich)
- Das SC überträgt den neuen Ki_2 an das AC
- Ebenfalls per Diffie Hellman handelt das SC auch einen PUK (oder weitere Geheimzahlen) mit dem Chip aus. (Der Netzbetreiber kann dem Kunden die Geheimzahlen anschließend mitteilen oder auch für Service-Zwecke selbst behalten)
- Im HLR wird das Hotlining Flag entfernt. Damit sind jetzt reguläre Calls möglich, wobei ab diesem Zeitpunkt der neue secret Key Ki_2 verwendet wird
- Das toolkitfähige Endgerät informiert den Kunden über Erfolg oder Mißerfolg
- Das toolkitfähige Endgerät könnte dem Kunden anbieten, die PIN neu zu setzen

### Wiederverwendung gebrauchter Chips / Karten

Sei das Teilnehmerverhältnis im HLR und AC ausgetragen, weil der Kunde gekündigt hat. Bei Vertragsabschluß mit dem neuen Kunden und dem gebrauchten Chip muß folgendes geschehen:
Zuerst wird die Funktion des Endgeräts zum Initialisieren des Chips genutzt. Daraufhin wird im Chip:
   - Ki_2 wird gelöscht
   - Ki_1 wird wieder aktiviert
   - die PIN wird auf 0000 gesetzt
   - der PUK wird auf 00000000 gesetzt (analog mit weiteren Geheimzahlen PUK2)

Diese Funktion könnte innerhalb des D1-Netzes beispielsweise der *X13 aktivieren,* der bei vielen Händlern steht. Damit hat der Händler wieder eine initiale Karte zum Vergeben.

Weiter geht es wie bei Kundengewinnung und Freischaltung durch den Netzbetreiber (s. o.)

### Wechsel des secret key während der Nutzungsdauer des Chip

Der Netzbetreiber hat die Möglichkeit, in regelmäßigen Abständen einen Wechsel des Ki zu erzwingen. Dazu reicht es aus, im HLR das Hotlining-Flag zu setzen, den Call zum SC zu routen und wie oben beschrieben einen neuen Ki auszuhandeln. Der PUK sollte diesmal jedoch nicht neu ausgehandelt werden.

### Mögliche Mißbrauchsszenarien (hier für D1 dargestellt)

1. Der Schlüssel K1 eines Chipherstellers ist kompromittiert und eine Karte wird nachgemacht
   1.1 Die IMSI ist im AC noch nicht bekannt
      Die Karte bucht nicht ein
   1.2 Die IMSI der echten Karte ist bereits im AC und wurde bereits endpersonalisiert
      Die falsche Karte bucht nicht ein, da Ki_1 ungleich Ki_2 ist (Authentikation gescheitert)
   1.3 Die echte IMSI ist bereits im AC, wurde aber noch nicht endpersonalisiert

   Dies ist der kurze Zeitraum zwischen Vertragsabschluß und erstem Einschalten des Geräts. In dieser Zeit könnte sich eine Kartenfälschung "dazwischenschieben". Die echte Karte würde danach nicht einbuchen können, da sie nicht den Ki_2 der Fälschung besitzt. Dieses Szenario könnte organisatorisch vermieden werden, z.B. indem bei der Subscription eine Geheimzahl auf das Auftragsformular geschrieben wird, die der Kunde nach dem Schlüssel-Aushändigen eingeben muß, die zum SC geschickt wird und dort geprüft wird.
2. Der Kunde macht seine eigene Karte initial (z. B. mit X13) Die Karte hat danach den Ki_1 und bucht nicht mehr ein.

Die Erfindung wird nun anhand eines Ausführungsbeispiels anhand der Zeichnungen näher beschrieben. Hierbei gehen aus den Zeichnungen und ihrer Beschreibung weitere Merkmale und Vorteile hervor.

### Es zeigen:

- Figur 1:: Schematisiert die Vorpersonalisierung der Karten beim Kartenhersteller;
- Figur 2:: Schematisiert die Vorgänge beim Freischalten durch den Netzbetreiber (Endpersonalisierung);
- Figur 3:: Schematisiert die Vorgänge beim Löschen des Chips und bei der Wiederverwendung.

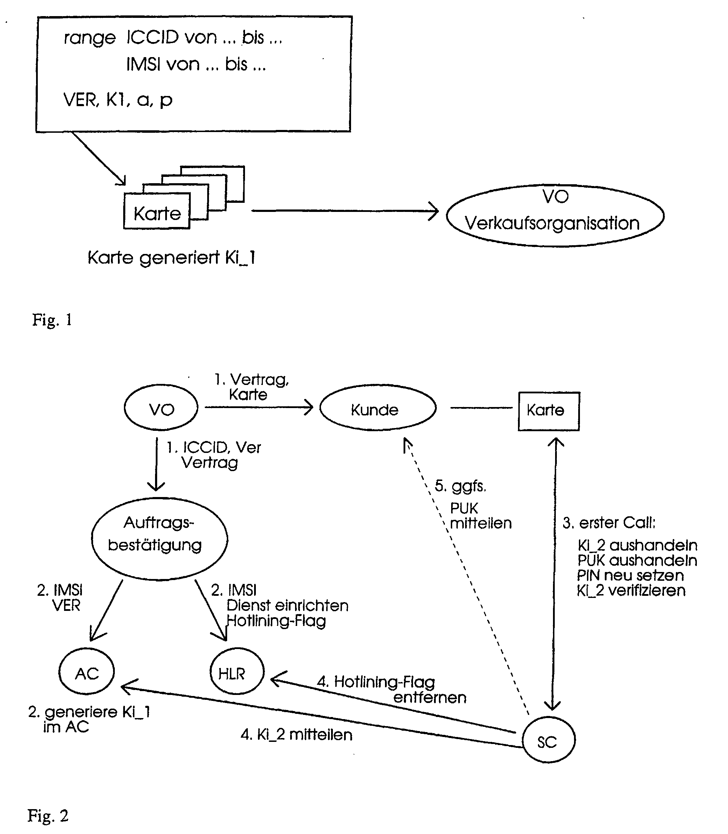

In Figur 1 ist zeichnerisch dargestellt, was bereits schon auf Seite 4 der Beschreibung angegeben ist, daß nämlich die Kartennummer ICCID in einem Bereich von einer Zahl X bis zu einer Zahl Y vorliegt.

Gleiches gilt für die Teilnehmerkennung IMSI, die ebenfalls in einem Zahlenbereich von A-B vorliegt.

Innerhalb der beiden Nummernbereiche für die ICCID und für die IMSI wird ferner eine Zahl a als Basis für die Diffie Hellman gewählt und ebenso eine Zahl p, die als Primzahl für die Diffie Hellman-Verschlüsselung dient.

Es wird ferner eine VER definiert, die als Funktionsnummer 8 Byte lang sein kann und ferner wird der Schlüssel K1 als DES-Schlüssel errechnet, der an VER gebunden ist.

Die genannten Daten werden in die Karte eingeschrieben und hierbei generiert (errechnet) der Chip dann die Geheimzahl Ki_1, welche in der Karte gespeichert wird. Die Karte wird in dieser Form (Vorpersonalisierung) an die VO (Verkaufsorganisation) ausgeliefert.

In Figur 2 sind die einzelnen Vorgänge beschrieben, die ab Seite 5 der Beschreibung dargestellt sind.

Die VO geht in einem ersten Verfahrensschritt mit dem Kunden einen Vertrag ein. Im gleichen Verfahrensschritt wird die Kartennummer ICCID und die Versionsnummer in einer Auftragsbestätigung zusammen mit dem Vertrag eingetragen und diese Auftragsbestätigung wird in einem zweiten Verfahrensschritt zusammen mit der Teilnehmerkennung und der Versionsnummer VER an das AC mitgeteilt.

Gleichzeitig wird durch Mitteilung der Teilnehmerkennung IMSI an das HLR dafür gesorgt, daß das HLR die Kartendaten zur Kenntnis erhält und das sogenannte Hotlining Flag einrichtet.

Der Kunde erhält nun seine vorpersonalisierte Karte und nimmt mit dem ersten Anruf - der im Sinne der vorliegenden Erfindung zwangsläufig auf das SC geschaltet ist - Kontakt mit dem SC auf, wobei bei diesem ersten Anruf die Ki_2 ausgehandelt wird, ebenso wie die PUK und gleichzeitig wird auch die PIN neu gesetzt. Das SC andererseits verifiziert die geheime Schlüsselzahl Ki_2 gegenüber der Karte.

In einem vierten Verfahrensschritt nimmt SC Kontakt mit dem HLR auf und entfernt das Hotlining Flag, was dem Kunden nun die Möglichkeit gibt, beliebige Calls abzusetzen.

Das SC teilt im vierten Verfahrensschritt gleichzeitig die geheime Schlüsselzahl Ki_2 dem AC mit.

Damit ist die Karte freigeschaltet und endpersonalisiert.

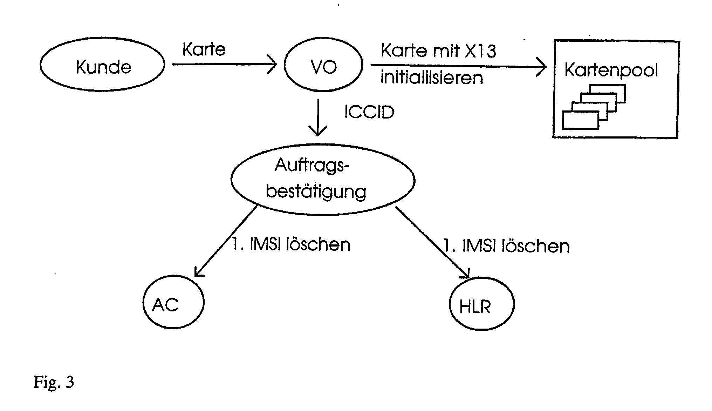

Die Wiederverwendung gebrauchter Karten ist weiter oben näher dargestellt. Hierbei ist in Figur 3 erkennbar, daß der Kunde mit seiner Karte sich an die VO wendet, welche durch Eintragung der Kartennummer ICCID in die Auftragsbestätigung dafür sorgt, daß im AC die IMSI gelöscht wird und gleichzeitig auch im HLR.

Damit wird auch die Ki_2 gelöscht und die Ki_1 wird wieder aktiviert und in die Karte eingespeichert. Ebenso wird die PIN auf den Wert OOOO gesetzt und ebenfalls die PUK.

Die so wieder vorpersonalisierte Karte kann denn in einen Kartenpool eingestellt werden und für neue Kunden vergeben werden.

Die Endpersonalisierung wurde also wieder rückgängig gemacht und des liegt wieder der Zustand der Karte vor, wie er zum Zeitpunkt der Vorpersonalisierung bestand.

Es sei noch angemerkt, daß die Stelle des Netzbetreibers, bei welcher die Auftragsbestätigung äbgewickelt wird, als Auftragsannahmestelle bezeichnet wird und diese Auftragsannahmestelle kennt die Zuordnungen von ICCID zu IMSI wegen der 1:1-Zuordnung innerhalb des vergebenen Nummernbereiches.

## Patentansprüche

1. Verfahren zur Personalisierung von GSM-Chips, in deren Speicherbereich mindestens eine Teilnehmer-Kennung IMSI, eine Kartennummer ICCID und zwecks Personalisierung ein geheimer Schlüssel Ki und gegebenenfalls weitere Daten eingespeichert werden, wobei zur Vorpersonalisierung des Chips beim Hersteller zunächst initiale, kartenbezogene Daten, nämlich ein erster, geheimer Schlüssel Ki_1 und gegebenenfalls weitere Daten, wie PIN und PUK eingespeichert werden,
**dadurch gekennzeichnet,**
**daß** die Personalisierung des Chips dann erfolgt, wenn der Teilnehmer sich erstmals in das Teilnehmernetz einbucht, wobei folgende Verfahrensschritte durchlaufen werden:
- in einem ersten Verfahrensschritt entnimmt der Chiphersteller die ICCID und IMSI einem Nummernpool, der Chip selbst leitet sich aus einem Schlüssel K1, den der Chiphersteller kennt und in den Chip einbringt, einen initialen, ersten Schlüssel Ki_1 ab, PIN und PUK werden auf einen Defaultwert gesetzt;
- in einem zweiten Verfahrensschritt erfolgt ein Eintrag im Authentifikationszentrum (AC) und der Heimatdatenbank (HLR), sobald ein Teilnehmer einen Vertrag mit dem Netzbetreiber geschlossen hat;
- in einem dritten Verfahrensschritt leitet sich das Authentifikationszentrum (AC) ebenfalls den initialen, ersten Schlüssel Ki_1 ab;
- in einem vierten Verfahrensschritt setzt das Netz die Bedingungen, damit beim Einbuchen ins Netz eine Verbindung vom Chip zum Security Center des Netzbetreibers (SC) entsteht;
- in einem fünften Verfahrensschritt wird beim ersten Einbuchen die Verbindung vom Chip zum Security Center (SC) geschaltet;
- in einem sechsten Verfahrensschritt wird im Security Center (SC) ein neuer, zweiter, geheimer Schlüssel Ki_2, sowie gegebenenfalls ein PUK mit dem Chip ausgehandelt oder im Security Center (SC) erzeugt und zum Chip übertragen;
- in einem siebten Verfahrensschritt werden die Bedingungen aus dem vierten Verfahrensschritt wieder ausgeschaltet.

2. Verfahren nach Anspruch 1, **dadurch gekennzeichnet, daß** der erstmalig in den Chip eingespeicherte, initiale, geheime Schlüssel Ki_1 vor Vertragsabschluß nicht in das Authentifikationszentrum (AC) übertragen und dort gespeichert wird.

3. Verfahren nach Anspruch 1, **dadurch gekennzeichnet, daß** zum Aushandeln des zweiten, geheimen Schlüssels Ki_2 ein Verfahren nach Diffie-Hellman verwendet wird.

4. Verfahren nach einem der Ansprüche 1-3, **dadurch gekennzeichnet, daß** die Heimatdatenbank (HLR) geeignet ist, einen Umleitungsbefehl (Hotlining-Flag) zu setzen und zu löschen.

5. Verfahren nach Anspruch 4, **dadurch gekennzeichnet, daß** mit der erstmaligen Eintragung des initialen Schlüssel Ki_1 in das Authentifikationszentrum (AC) auch das Hotlining flag in der Heimatdatenbank (HLR) gesetzt wird.

6. Chip zur Ausübung des Verfahrens nach einem der Ansprüche 1 bis 5, in dessen Speicherbereich mindestens eine Teilnehmer-Kennung IMSI und eine Kartennummer ICCID und zwecks Personalisierung ein geheimer Schlüssel Ki und gegebenenfalls weitere Daten eingespeichert sind, wobei zur Vorpersonalisierung des Chips ferner initiale, kartenbezogene Daten, nämlich ein erster, geheimer Schlüssel Ki_1 und gegebenenfalls weitere Daten, wie PIN und PUK eingespeichert sind, **dadurch gekennzeichnet,**
**daß** der Chip im Endgerät toolkitfähig ist, und Mittel aufweist, mit welchen er mit einem Security Center (SC) kommunizieren und einen Schlüssel aushandeln kann.

7. Chip nach Anspruch 6, **dadurch gekennzeichnet, daß** er Mittel aufweist, mit denen er Daten aus dem Security Center (SC) empfängt und diese in einen Speicher einschreibt und gegebenenfalls aus dem Speicher ausliest, verändert und/oder an das Security Center (SC) überträgt.

8. Chip nach einem der Ansprüche 6 oder 7, **dadurch gekennzeichnet, daß** er einen Mikroprozessor zum Aushandeln eines geheimen Schlüssels mit dem Security Center (SC) aufweist.

9. Chip nach einem der Ansprüche 6-8, **dadurch gekennzeichnet, daß** er eine vom Hersteller fest programmierte Rufnummer enthält (fixed dialing).

## Claims

1. Method for personalization of GSM chips in the memory area of which at least a subscriber identification IMSI, a card number ICCID and for personalization purposes a secret key Ki and optionally other data are stored, initial card-related data, namely a first secret key Ki_1 and optionally other data such as PIN and PUK, first being stored for preliminary personalization of the chip by the manufacturer,
**characterized in that**
personalization of the chip occurs when the subscriber logs into the subscriber network for the first time, and involves the following sequence of method steps:
- in a first method step, the chip manufacturer draws the ICCID and IMSI from a number pool, the chip itself derives an initial, first key Ki_1 from a key K1 which the chip manufacturer knows and enters into the chip, PIN and PUK are set to a default value;
- in a second method step, a record is made in the authentication centre (AC) and the home databank (HLR) once a subscriber has concluded a contract with the network operator;
- in a third method step, the authentication centre (AC) likewise derives the initial, first key Ki_1;
- in a fourth method step, the network sets up the conditions so that on logging into the network a connection is made from the chip to the network operator's security centre (SC);
- in a fifth method step, upon the first log-in, the connection is put through from the chip to the security centre (SC);
- in a sixth method step, a new, second secret key Ki_2 and optionally a PUK are agreed with the chip in the security centre (SC), or created in the security centre (SC) and transmitted to the chip;
- in a seventh method step, the conditions stemming from the fourth method step are cut off again.

2. Method according to Claim 1, **characterized in that** the initial secret key Ki_1 originally stored in the chip before the conclusion of the contract is not transmitted to the authentication centre (AC) and stored there.

3. Method according to Claim 1, **characterized in that** a Diffie-Hellman method is used for agreeing the second secret key Ki_2.

4. Method according to any one of Claims 1-3, **characterized in that** the home databank (HLR) is qualified to set and to cancel a diversion instruction (hotlining flag).

5. Method according to Claim 4, **characterized in that** upon the first entry of the initial key Ki_1 in the authentication centre (AC) the hotlining flag is also set in the home databank (HLR).

6. Chip for carrying out the method according to any one of Claims 1 to 5, in the memory area of which at least a subscriber identification IMSI and a card number ICCID and for personalization purposes a secret key Ki and optionally other data are stored, initial card-related data, namely a first secret key Ki_1 and optionally other data such as PIN and PUK, also being stored for preliminary personalization of the chip, **characterized in that** the chip in the terminal has toolkit capability and means enabling it to communicate, and agree a key, with a security centre (SC).

7. Chip according to Claim 6, **characterized in that** it has means for receiving data from the security centre (SC) and writing them into a memory and optionally reading them out of the memory, amending them and/or transmitting them to the security centre (SC).

8. Chip according to Claim 6 or Claim 7, **characterized in that** it has a microprocessor for agreeing a secret key with the security centre (SC).

9. Chip according to any one of Claims 6-8, **characterized in that** it contains a call-number fixedly programmed by the manufacturer (fixed dialing).

## Revendications

1. Procédé pour personnaliser des puces GSM dans la zone de mémoire desquelles sont entrés au moins une identification d'abonné IMSI, un numéro de carte ICCID et, pour la personnalisation, une clé confidentielle Ki et éventuellement d'autres données, étant précisé que pour une personnalisation préalable de la puce chez le fabricant, des données initiales relatives à la carte sont tout d'abord entrées, à savoir une première clé confidentielle Ki_1 et éventuellement d'autres données telles qu'un PIN et une PUK,
**caractérisé en ce que** la personnalisation de la puce a lieu lorsque l'abonné s'enregistre pour la première fois dans le réseau d'abonnés, les phases de procédé suivantes étant exécutées :
- lors d'une première phase, le fabricant de puces prend l'ICCID et l'IMSI dans un pool de numéros, la puce elle-même déduit d'une clé K1, que le fabricant de puces connaît et entre dans la puce, une première clé initiale Ki_1, le PIN et la PUK sont placés à une valeur par défaut ;
- lors d'une deuxième phase, une inscription dans le centre d'authentification (AC) et dans l'enregistreur de localisation nominal (HLR) a lieu dès qu'un abonné a conclu un contrat avec l'exploitant du réseau ;
- lors d'une troisième phase, le centre d'authentification (AC) déduit également la première clé initiale Ki_1 ;
- lors d'une quatrième phase, le réseau pose les conditions pour que lors de l'enregistrement dans le réseau, une liaison soit créée entre la puce et le centre de sécurité de l'exploitant du réseau (SC) ;
- lors d'une cinquième phase, la liaison entre la puce et le centre de sécurité (SC) est commutée lors du premier enregistrement ;
- lors d'une sixième phase, une nouvelle et seconde clé confidentielle Ki_2 et éventuellement une PUK sont convenues avec la puce ou sont générées dans le centre de sécurité (SC) et sont transmises à la puce ;
- lors d'une septième phase, les conditions résultant de la quatrième phase sont supprimées.

2. Procédé selon la revendication 1, **caractérisé en ce que** la clé confidentielle initiale Ki_1 mise en mémoire pour la première fois dans la puce n'est pas transmise au centre d'authentification (AC) ni mise en mémoire dans celle-ci avant qu'un contrat ne soit conclu.

3. Procédé selon la revendication 1, **caractérisé en ce que** pour convenir de la seconde clé confidentielle Ki_2, on utilise un procédé selon Diffie-Hellmann.

4. Procédé selon l'une des revendications 1 à 3, **caractérisé en ce que** l'enregistreur de localisation nominal (HLR) est apte à donner et à effacer un ordre de renvoi de déviation (indicateur de ligne directe).

5. Procédé selon la revendication 4, **caractérisé en ce que** lors de la première inscription de la clé initiale Ki_1 dans le centre d'authentification (AC), l'indicateur de ligne directe est également placé dans l'enregistreur de localisation nominal (HLR).

6. Puce pour mettre en oeuvre le procédé selon l'une des revendications 1 à 5, dans la zone de mémoire de laquelle sont mis en mémoire au moins une identification d'abonné IMSI, un numéro de carte ICCID et, pour la personnalisation, une clé confidentielle Ki, et éventuellement d'autres données, étant précisé que pour une personnalisation préalable de la puce, des données initiales relatives à la carte sont également mises en mémoire, à savoir une première clé confidentielle Ki_1 et éventuellement d'autres données comme le PIN et la PUK,
**caractérisée en ce que** la puce dans le terminal peut être équipée d'un toolkit (norme GSM 11.14) et comporte des moyens grâce auxquels elle peut communiquer avec un centre de sécurité (SC) et convenir d'une clé.

7. Puce selon la revendication 6, **caractérisée en ce qu'**elle comporte des moyens grâce auxquels elle reçoit des données provenant du centre de sécurité (SC), elle les inscrit dans une mémoire et elle les sort éventuellement de la mémoire, les modifie et/ou les transmet au centre de sécurité (SC).

8. Puce selon la revendication 6 ou 7, **caractérisée en ce qu'**elle comporte un microprocesseur pour convenir d'une clé confidentielle avec le centre de sécurité (SC).

9. Puce selon l'une des revendications 6 à 8, **caractérisée en ce qu'**elle contient un numéro d'appel programmé définitivement par le fabricant (fixed dialing).
